# EUROPÄISCHE PATENTSCHRIFT

(11) **EP 1 356 354 B1**
(45) Veröffentlichungstag und Bekanntmachung des Hinweises auf die Patenterteilung: **03.05.2006**
(21) Anmeldenummer: 02714130.8
(22) Anmeldetag: 29.01.2002
(51) Int. Cl.: G05B 23/02, G05B 15/02

(54) **VERFAHREN ZUR BESTIMMUNG UND DARSTELLUNG EINER OPTIMIERTEN ANORDNUNG UND MONTAGE EINES RADIOMETRISCHEN MESSSYSTEMS**
METHOD FOR DETERMINING AND REPRESENTING AN OPTIMAL ARRANGEMENT AND INSTALLATION OF A RADIOMETRIC MEASURING SYSTEM
PROCEDE POUR LA DETERMINATION ET LA REPRESENTATION D'UN AGENCEMENT ET D'UN MONTAGE OPTIMISES D'UN SYSTEME DE MESURE RADIOMETRIQUE

(30) Priorität: 30.01.2001 DE 10104165
(43) Veröffentlichungstag der Anmeldung: 29.10.2003
(73) Patentinhaber: Endress + Hauser GmbH + Co. KG, 79689 Maulburg (DE)
(72) Erfinder: NEUHAUS, Joachim, 79585 Steinen (DE); KÄMEREIT, Wolfgang, 79650 Schopfheim (DE)
(74) Vertreter: Andres, Angelika Maria
(86) Internationale Anmeldenummer: PCT/EP2002/000892
(87) Internationale Veröffentlichungsnummer: WO 2002/061513

(56) Entgegenhaltungen:
- US-A- 5 675 499
- US-A- 6 006 604

## Beschreibung

Die Erfindung bezieht sich auf ein Verfahren zur Bestimmung und Darstellung einer optimierten Anordnung und Montage eines radiometrischen Meßsystems bzw. einer radiometrischen Meßstelle einer industriellen Prozeßmeß- und/oder Prozeßsteueranlage, welches radiometrische Meßsystem zur Messung von mindestens einer Prozeßvariablen oder Prozeßgröße dient.

Derartige radiometrische Meßsysteme für eine industriellenProzeßmeß- und/oder Prozeßsteueranlage sind beispielsweise solche, die an oder in einem Behälter oder Rohr angebracht sind und mit denen Prozeßvariablen oder Prozeßgrößen wie z.B. Druck, Differenzdruck, Füllstand, Grenzstand und/oder Dichte eines Mediums im Behälter oder Rohr erfaßt bzw. bestimmt werden. Die Art und Weise, wie diese Prozeßvariablen oder Prozeßgrößen erfaßt bzw. bestimmt werden, ist an sich bekannt.

Dabei umfassen insbesondere radiometrische Meßsysteme zur Messung einer Kenngröße, wie z.B. Füllstand, Grenzstand und/oder Dichte eines Mediums, im wesentlichen wenigstens eine radioaktive Strahlenquelle und wenigstens einen Detektor, der üblicherweise mit einem Transmitter verbunden sind, der wiederum den Meßgrößen entsprechende Signale an eine Zentrale bzw. Meßwarte übermittelt.

Nach einem üblichen Verfahren zur Bestimmung einer optimierten Anordnung eines radiometrischen Meßsystems an einem Behälter oder Rohr übermittelt ein Kunde oder ein Vertreter eines Kunden, der eine solche Anlage kaufen und installieren möchte, die zur Bestimmung der Anordnung des radiometrischen Meßsystems erforderlichen Daten von Behälter, Rohr und/oder Medium an einen Hersteller von solchen radiometrischen Meßsystemen, meist per Telefax. Beim Hersteller wird dann ein entsprechend geschulter Mitarbeiter anhand der vom Kunden übermittelten Daten und anhand der Kenndaten der vom Hersteller angebotenen Komponenten für ein radiometrisches Meßsystem wenigstens eine Anordnung berechnen und einen entsprechenden Vorschlag für die Auslegung des radiometrischen Meßsystems an den Kunden schicken.

Der Nachteil dieses Verfahrens besteht darin, daß es zeitaufwendig ist und in vielen Fällen weitere Korrespondenz erfordert.

Ein anderes Verfahren zur Bestimmung einer optimierten Anordnung eines radiometrischen Meßsystems an einem Behälter oder Rohr besteht darin, daß ein Hersteller einem interessierten Kunden eine entsprechende Software zur Verfügung stellt. Diese Software kann beim Kunden auf einem Rechner installiert werden, so daß er selbst die gewünschte Anordnung des radiometrischen Meßsystems berechnen lassen kann.

Es hat sich herausgestellt, daß bei diesem Verfahren und insbesondere beim Bedienen der Software beim Kunden genaue Kenntnisse der einzelnen Meßverfahren, beispielsweise der Füllstandsmessung und dort insbesondere der Radiometrie und den damit verbundenen physikalischen Grundlagen; zu Strahlehschutz-relevanten Vorschriften usw. vorausgesetzt werden, die dort vielfach nicht vorhanden sind. Da die Auslegung des Systems vom Kunden selbst vorgenommen wird, ist der Hersteller solcher Meßsysteme üblicherweise nicht für Schäden verantwortlich, die durch falsche, vom Kunden selbst vorgenommene Auslegung des Meßsystems hervorgerufen werden.

Es ist daher eine Aufgabe der Erfindung, die oben genannten Nachteile zu vermeiden und dem Kunden schnellstmöglich, auch unter sicherheitlichen Aspekten, eine optimierte Auslegung eines radiometrischen Meßsystems der industriellen Prozeßmeßtechnik, beispielsweise eines radiometrischen Meßsystems zur Füllstandsmessung zur Verfügung zu stellen. Darüber hinaus kann der Kunde bei Bedarf schnellstmöglich eine Bestellung auslösen.

Zur Lösung dieser Aufgabe offenbart die Erfindung ein Verfahren zur Bestimmung und Darstellung einer optimierten Anordnung und Montage eines radiometrischen Meßsystems bzw. einer radiometrischen Meßstelle einer industriellen Prozeßmeß- und/oder Prozeßsteuerantage gemäß Anspruche 1.

Weitere Ausführungsformen des erfindungsgemäßen Verfahrens werden in den abhängigen Ansprüchen offenbart.

Der Erfindung liegt die Idee zugrunde, ein geeignetes Verfahren zur Bestimmung und Darstellung einer optimierten Anordnung und Montage eines radiometrischen Meßsystems der industriellen Prozeßmeßtechnik, beispielsweise eines Füllstandsmeßsystems an einem Behälter oder Rohr zur Messung von mindestens einer Kenngröße eines im Behälter oder Rohres enthaltenen Mediums zur Verfügung zu stellen, welches Verfahren dazu dient, das gewünschte radiometrische System in Zusammenarbeit zwischen dem Kunden und dem Hersteller zu bestimmen und auszulegen. Aus Gründen der Sicherheit kann dann ein Hersteller sein Know-How und seine Erfahrung mit solchen radiometrischen Anlagen gegenüber dem Kunden direkt Kontakt einbringen.

Der besondere Vorteil der Erfindung zeigt sich darin, daß mit dem erfinderischen Verfahren Standard- und spezielle Anordnungen und Auslegungen von Meßsystemen der industriellen Prozeßmeßtechnik, beispielsweise von Fülstandsmeßsystemen, insbesondere radiometrischen Meßsystemen von und/oder in Zusammenarbeit, quasi im Zwiegespräch mit und von Nichtexperten vorgenommen werden kann. Das Verfahren bietet außerdem die Möglichkeit, dem jeweiligen Interessenten bzw. Kunden umfassende Informationen zu den einzelnen Komponenten und relevante Informationen zur Sicherheit der jeweiligen radiometrischen Anlage zu übermitteln, sei es in technischer als auch in Hinsicht auf die anzuwendenden Vorschriften.

Die Erfindung wird anhand der nachfolgenden Zeichnungen näher erläutert und beschrieben. Dabei zeigen:
Fig. 1 eine einen ersten und einen zweiten Rechner umfassende Anordnung zur Durchführung eines Verfahrens nach der Erfindung in schematischer Darstellung;
Fig. 2 eine erste Anordnung einer Meßstelle mit einem radiometrischen Meßsystem zur Bestimmung eines Füllstandes eines Mediums in einem horizontalen Behälter in schematischer Darstellung;
Fig. 3 eine zweite Anordnung einer Meßstelle mit einem radiometrischen Meßsystem zur Bestimmung eines Füllstandes eines Mediums in einem konischen vertikalen Behälter in schematischer Darstellung;
Fig. 4 eine dritte Anordnung einer Meßstelle mit einem radiometrischen Meßsystem zur Bestimmung eines Füllstandes eines Mediums in einem im wesentlichen zylindrischen vertikalen Behälter,
Fig. 5 eine vierte Anordnung einer Meßstelle mit einem radiometrischen Meßsystem zur Bestimmung eines Füllstandes eines Mediums in einem im wesentlichen zylindrischen vertikalen Behälter;
Fig. 6 eine fünfte Anordnung eine Meßstelle mit einem radiometrischen Meßsystem zur Bestimmung eines Füllstandes eines Mediums in einem Rohr oder horizontalen Behälter;
Fig. 7a, b Beispiele von Linearisierungskurven für eine Anordnung eines radiometrischen Meßsystem zur Bestimmung eines Füllstands eines Mediums;
Fig. 8 eine sechste Anordnung einer Meßstelle mit einem radiometrischen Meßsystem zur Bestimmung eines Grenzstandes eines Mediums in einem im wesentlichen zylindrischen vertikalen Behälter,
Fig. 9 eine siebte Anordnung einer Meßstelle mit einem radiometrischen Meßsystem zur Bestimmung eines Grenzstandes eines Mediums in einem im wesentlichen konischen vertikalen Behälter;
Fig. 10 eine achte Anordnung einer, Meßstelle mit einem radiometrischen Meßsystem zur Bestimmung eines Grenzstandes eines Mediums in einem im horizontalen Behälter;
Fig. 11 eine neunte Anordnung einer Meßstelle mit einem radiometrischen Meßsystem zur Bestimmung einer Dichte eines Mediums in einem Rohr;
Fig. 12 eine zehnte Anordnung einer Meßstelle mit einem radiometrischen Meßsystem zur Bestimmung einer Dichte eines Mediums in einem Rohr;
Fig. 13 eine Skizze eines Strahlenschutzbehälters mit Veranschaulichung der Ortsdosisleistungen;
Fig. 14a, b ein Ausführungsbeispiel eines Verfahrens nach der Erfindung als schematisch dargestelltes Ablaufdiagramm.

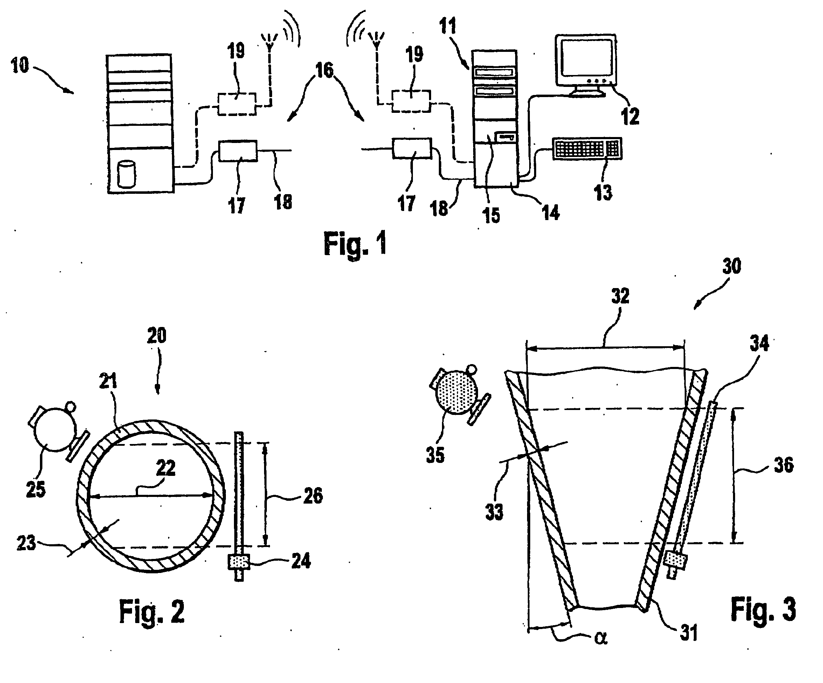

In den Fig. 2 bis 6 und 8 und 12 sind verschiedene Anordnungen für radiometrische Meßsysteme dargestellt, die für Füllstands-, Grenzstand- bzw. Dichtemessungen dienen können. Diese Darstellungen von Meßstellen sind schematisch und veranschaulichen die wichtigsten Kenngrößen von Behältern bzw. Rohren, die entsprechend der gewünschten Messung bei dem erfindungsgemäßen Verfahren berücksichtigt werden. Darüber hinaus eignet sich diese Art von Darstellungen dazu, eine nach dem erfindungsgemäßen Verfahren bestimmte optimierte Anordnung und Montage eines radiometrischen Meßsystems an einem Behälter oder Rohr auf der Anzeigevorrichtung des zweiten Rechners in Form einer Skizze anzuzeigen.

Fig. 1 ist eine schematische Darstellung einer Anordnung mit einem ersten und einem zweiten Rechner 10 und 11, mit denen das erfindungsgemäße Verfahren zur Bestimmung und Darstellung einer optimierten Anordnung und Montage eines radiometrischen Meßsystems 20, 30, 40, 50, 60, 70, 80, 90, 110, 120 an einem Behälter 21, 31, 41, 51, 61, 71, 81, 91 oder einem Rohr 111, 121 (siehe dazu Fig. 2-9 und 11, 12) ausgeführt wird. Der erste Rechner 10 umfaßt eine hier nicht näher bezeichnete Prozessor-gesteuerte Datenverarbeitungsvorrichtung sowie wenigstens einen Massenspeicher. Der zweite Rechner 11 umfaßt eine elektronische Prozessor-gesteuerte Datenverarbeitungsvorrichtung 14, wenigstens einen Massenspeicher 15 und eine Eingabevorrichtung, die vorzugsweise eine Tastatur 13 ist. Selbstverständlich können zur Vereinfachung der Bedienung noch weitere Eingabevorrichtungen, wie z.B. Zeigergeräte angeschlossen sein.

An den ersten und den zweiten Rechner 10 und 11 sind Datenaustauschvor richtungen 16 angeschlossen, über die die beiden Rechner 10 und 11 miteinander kommunizieren können. Die Datenaustauschvorrichtungen 16 umfassen im Falle einer drahtgebundenen Verbindung üblicherweise Modems oder Adapter 17, die z.B. über ein Kabel 18 mit einem üblichen, öffentlichen oder privaten Datenübertragungsnetz verbunden sind, über das dann ein Austausch von Daten zwischen den beiden Rechnern 10 und 11 stattfindet. Das Datenübertragungsnetz kann ein beliebiges Netz sein, das elektrische oder optische Leiter verwendet oder Funkübertragungsstrecken oder sogar eine beliebige Kombination davon umfaßt, wie z.B. die bekannten Netzwerke fürs Telefonnetz, fürs Stromversorgungsnetz, für ein Netz aus optischen Leiterkabeln, für ein Fernsehkabelnetz oder ein sonstiges Netzwerk, das auch Datenübertragungsstrecken via Satellit umfaßt. Im Falle von heute vielfach verwendeten mobilen Telefonen, bei denen also die Informationsübertragung drahtlos funktioniert, sind entsprechende Adapter für drahtlose Verbindungen 19 (in Fig. 1 strichliert dargestellt) mit den Rechnern 10 und 11 zu verbinden, um auf diese Weise eine Kommunikation zwischen den Rechnern 10 und 11 zu ermöglichen. Diese und andere Möglichkeiten zur Verbindung zweier Rechner auch über größere Entfernungen mittels öffentlicher bzw. privater Netzwerke sind hinlänglich bekannt. Beide Rechner 10 und 11 können selbst Stand-Alone Rechner oder Arbeitsstationen sein, die selbst Teil eines Netzwerkes sind.

In Fig. 2 ist eine erste Anordnung 20 einer Meßstelle mit einem radiometrischen Meßsystem zur Bestimmung eines Füllstandes eines Mediums in einem horizontalen Behälter schematisch dargestellt. Bei dieser Anordnung handelt es sich um einen horizontal angeordneten Behälter 21 in dessen Innerem sich das Medium befindet, dessen Füllstand bestimmt werden soll. Das radiometrische Meßsystem umfaßt einen Strahlendetektor 24 und eine Strahlenquelle in einem Strahlenschutzbehälter 25, die jeweils seitlich am Behälter 21 angebracht sind. Wichtige Kenngrößen zur Bestimmung einer optimierte Anordnung des Meßsystems nach dem erfindungsgemäßen Verfahren sind ein Innendurchmesser 22 und eine Wandstärke 23 des Behälters 21. Ein Meßbereich 26, also der Bereich zwischen jener maximalen bzw. minimalen Füllhöhe des Mediums im Behälter 21, der mit dem radiometrischen Meßsystem gemessen werden soll, ist durch einen Doppelpfeil veranschaulicht. Dieser Bereich wird vom Strahlendetektor 24 überdeckt. Vorzugsweise wird der Strahlendetektor 24 zum Behälter hin tangential ausgerichtet, wie in Fig. 2 gezeigt.

In Fig. 3 zeigt in einer schematischen Darstellung eine zweite-Anordnung 30 einer Meßstelle mit einem radiometrischen Meßsystem zur Bestimmung eines Füllstandes eines Mediums in einem vertikal aufgestellten, konischen Behälter 31. Ein Strahlendetektor 34 und eine Strahlenquelle in einem Strahlenschutzbehälter 35 sind jeweils seitlich am Behälter 31 angebracht. Wichtige Kenngrößen zur Bestimmung einer optimierte Anordnung des Meßsystems nach dem erfindungsgemäßen Verfahren sind ein Innendurchmesser 32 und eine Wandstärke 33 des Behälters 31 sowie ein Winkel α, mit dem die Konizität des Behälters berücksichtigt werden kann. Der Meßbereich 36, in dem der Füllstand des Mediums im Behälter 31 gemessen werden soll, ist durch einen Doppelpfeil veranschaulicht. Dieser Bereich wird vom Strahlendetektor 34 überdeckt, der vorzugsweise parallel zur Behälterwand montiert werden sollte.

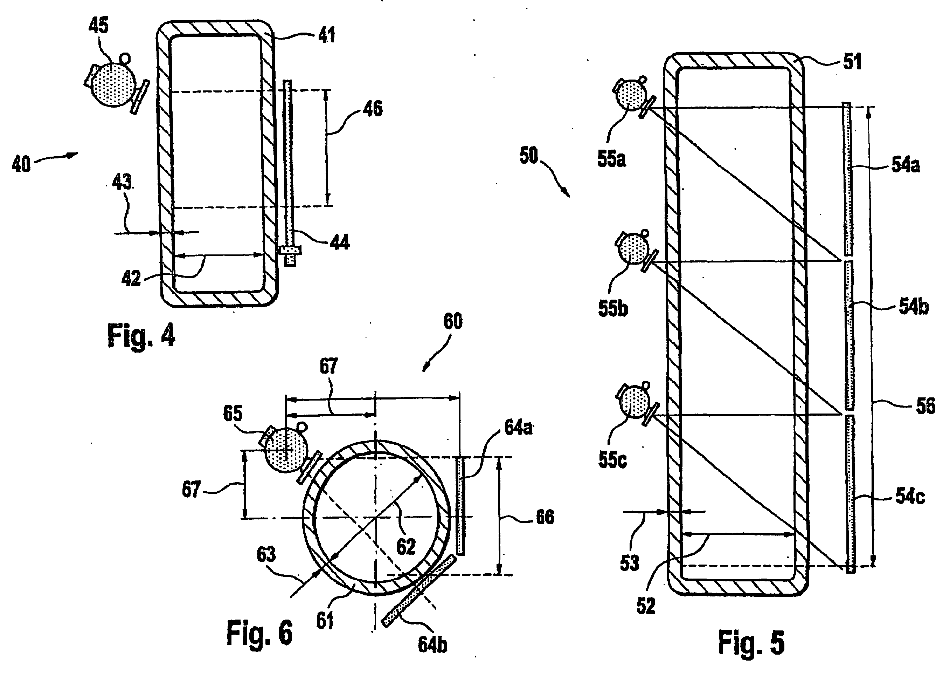

In Fig. 4 ist eine dritte Anordnung 40 einer Meßstelle mit einem radiometrischen Meßsystem zur Bestimmung eines Füllstandes eines Mediums in einem vertikal aufgestellten, zylindrischen Behälter 41 schematisch dargestellt. Ein Strahlendetektor 44 und eine Strahlenquelle in einem Strahlenschutzbehälter 45 sind jeweils seitlich am Behälter 41 angebracht. Wichtige Kenngrößen zur Bestimmung einer optimierte Anordnung des Meßsystems nach dem erfindungsgemäßen Verfahren sind ein Innendurchmesser 42 und eine Wandstärke 43 des Behälters 41. Der Meßbereich 46, in dem der Füllstand des Mediums im Behälter 41 gemessen werden soll, ist durch einen Doppelpfeil symbolisiert. Dieser Bereich wird vom Strahlendetektor 44 überdeckt, der vorzugsweise parallel zur Behälterwand montiert werden sollte.

Fig. 5 zeigt schematisch eine vierte Anordnung 50 einer Meßstelle mit einem radiometrischen Meßsystem zur Bestimmung eines Füllstandes eines Mediums in einem vertikal aufgestellten, zylindrischen Behälter 51. Bei dieser Anwendung werden wegen eines relativ großen Meßbereichs 56 insgesamt drei Strahlendetektoren 54a, b, c und drei Strahlenquellen in Strahlenschutzbehältern 55a, b, c verwendet, da ein einzelner Strahlendetektor nicht ausreicht, den gesamten Meßbereich zu überdecken und zu erfassen. Ähnlich verhält es sich mit den Strahlenquellen in den Strahlenschutzbehältern 55a, b, c. Da bei den Strahlenschutzbehältern aus Sicherheitsgründen nur ein bestimmter Öffnungswinkel für die austretende radioaktive Strahlung zugelassen ist, üblicherweise bis ca. 40°, werden bei ausgedehnten Meßbereichen, wie hier abgebildet, mehrere Strahlenquellen bzw. Strahlenschutzbehälter verwendet. Sie sind ebenso wie die jeweils seitlich am Behälter 61 angebrachten Strahlendetektoren 54a, b, c angebracht. Wichtige Kenngrößen zur Bestimmung einer optimierte Anordnung des Meßsystems nach dem erfindungsgemäßen Verfahren sind ein Innendurchmesser 52 und eine Wandstärke 53 des Behälters 51. Der Meßbereich 56, in dem der Füllstand des Mediums im Behälter 51 gemessen werden soll, ist durch einen Doppelpfeil veranschaulicht. Die Strahlendetektoren 54a, b, c sind vorzugsweise parallel zur Behälterwand montiert.

Fig. 6 veranschaulicht eine fünfte Anordnung 60 einer Meßstelle mit einem radiometrischen Meßsystem zur Bestimmung eines Füllstandes eines Mediums in einem horizontalen Behälter 61. Hier sind zwei Strahlendetektoren 64a, b und eine Strahlenquelle in einem Strahlenschutzbehälter 65 seitlich am Behälter 41 angebracht. Bei horizontalen Behältern mit großem Durchmesser kann der Meßbereich für die Füllstandsmessung so ausgedehnt sein, das er nur von einem Strahlendetektor erfaßt werden kann, dessen Länge dem Durchmesser des Behälters entspricht. Aus verschiedenen Gründen ist ein solch langer Strahlendetektor jedoch nicht immer erwünscht. Einerseits ist er sperrig und seine Montage ungünstig, anderseits sind seine endseitigen Bereiche sehr weit vom Behälter entfernt, so daß die Messung dadurch ungünstig beeinflußt werden kann. Es bietet sich in solchen Fällen an, statt einem sehr langen Strahlendetektor mehrere kürzere zu verwenden, die sich wegen ihrer Kürze besser und wirksamer am Behälter anbringen lassen.

Wichtige Kenngrößen zur Bestimmung einer optimierte Anordnung des Meßsystems nach dem erfindungsgemäßen Verfahren sind ein Innendurchmesser 62 und eine Wandstärke 63 des Behälters 61 und die Mittenabstände 67, 68, die die Lage des Strahlenschutzbehälters 65 angeben. Der Meßbereich 66, in dem der Füllstand des Mediums im Behälter 61 gemessen werden soll, ist durch einen Doppelpfeil veranschaulicht.

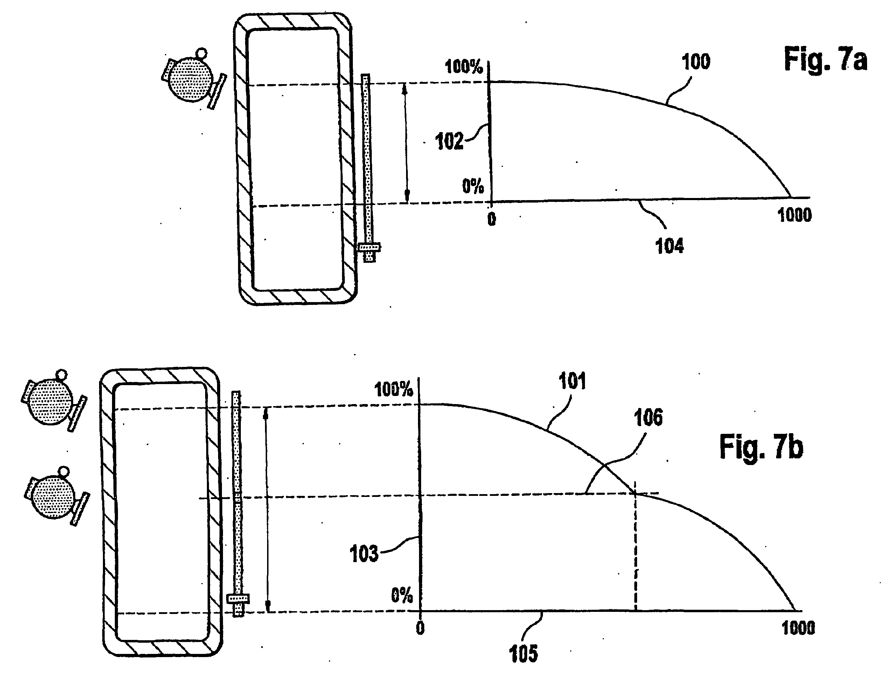

In den Fig. 7 a und 7b sind zwei Beispiele von sogenannten Linearisierungskurven 100 und 101 dargestellt. Diese Linearisierungskurven veranschaulichen bei Füllstandsmessungen mit radiometrischen Meßsystemen einen relativen Füllstand 102, 103 in % als Funktion eines normierten gemessenen radiometrischen Signals 104, 105, das hier am Beispiel länglicher bzw. zylindrischer Detektoren(-Gehäuse) als normierte Impulsrate über den Meßbereich aufgetragen ist. Die normierte Impulsrate ist also dann am größten, wenn sich kein Medium im Behälter, d.h. im Meßbereich befindet, das die radioaktive Strahlung dämpft. Wenn der Füllstand 100% erreicht, ist im gesamten Meßbereich im Behälter Medium vorhanden, so daß die Dämpfung des radioaktiven Meßsignals am größten ist und die normierte Impulsrate Null ist.

Die Linearisierungskurven 100, 101 in den Fig. 7a und 7b veranschaulichen zwei unterschiedliche Anordnungen der bisher vorgestellten radiometrischen Meßsysteme. In Fig. 7a ist ein Beispiel einer solchen Linearisierungskurve 100 dargestellt, die bei einem Meßsystem gewonnen wird, das eine Strahlenquelle und einen einzelnen Detektor umfaßt. Die Linearisierungskurve 101 der Fig. 7b gibt ein Beispiel wieder für einem Meßsystem, das eine Strahlenquelle und zwei Detektoren umfaßt. Die Linearisierungskurve 101 setzt sich daher aus zwei Kurvenabschnitten zusammen, die jeweils einem der zwei Detektoren zuzuordnen sind. Zur Veranschaulichung ist in Fig. 7b ein Trennstrich 106 dargestellt.

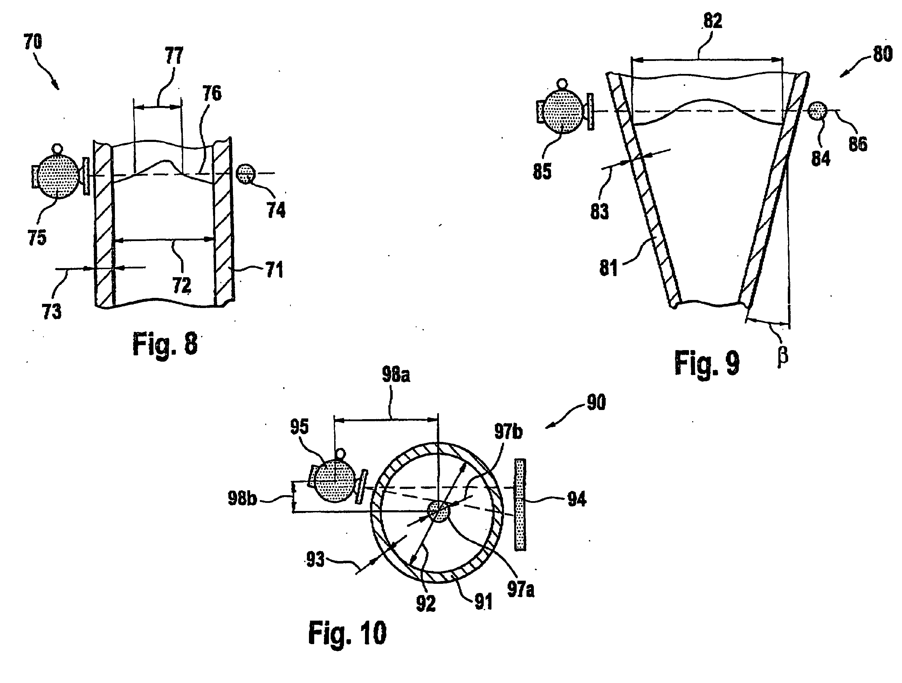

In Fig. 8 ist eine sechste Anordnung 70 einer Meßstelle mit einem radiometrischen Meßsystem zur Bestimmung eines Grenzstandes eines Mediums in einem vertikal aufgestellten, zylindrischen Bereich eines Behälter 71 schematisch dargestellt. Ein Strahlendetektor 74 und eine Strahlenquelle in einem Strahlenschutzbehälter 75 sind jeweils seitlich am Behälter 41 angebracht. Wichtige Kenngrößen zur Bestimmung einer optimierte Anordnung des Meßsystems nach dem erfindungsgemäßen Verfahren sind ein Innendurchmesser 72 und eine. Wandstärke 73 des Behälters 71. Der zu erfassende Grenzstand 76 des Mediums im Behälter 71 ist durch eine gepunktete Linie symbolisiert. Im Falle von Schüttgut als Medium im Behälter 71 muß für die Bestimmung des Grenzstands noch die vertikale zugelassene Erstreckung 77 eines Schüttkegels über den Grenzstand hinaus berücksichtigt werden. Der Strahlendetektor 74 ist vorzugsweise derart angeordnet, daß er in der gewünschten Ebene des zu messenden Grenzstandes liegt.

Fig. 9 zeigt eine siebte Anordnung 80 einer Meßstelle mit einem radiometrischen Meßsystem zur Bestimmung eines Grenzstandes eines Mediums in einem vertikal aufgestellten, konischen Bereich eines Behälter 81 schematisch dargestellt. Ein Strahlendetektor 84 und eine Strahlenquelle in einem Strahlenschutzbehälter 85 sind jeweils seitlich am Behälter 41 angebracht. Wichtige Kenngrößen zur Bestimmung einer optimierte Anordnung des Meßsystems nach dem erfindungsgemäßen Verfahren sind ein Innendurchmesser 82 und eine Wandstärke 83 des Behälters 81 sowie ein Winkel α, mit dem die Konizität des Behälters 81 berücksichtigt werden kann. Der zu erfassende Grenzstand 86 des Mediums im Behälter 81 ist durch eine gepunktete Linie symbolisiert. Im Falle von Schüttgut als Medium im Behälter 81 muß für die Bestimmung des Grenzstands noch die vertikale zugelassene Erstreckung eines Schüttkegels über den Grenzstand hinaus berücksichtigt werden.

In Fig. 10 ist eine achte Anordnung 90 einer Meßstelle mit einem radiometrischen Meßsystem zur Bestimmung eines Grenzstandes eines Mediums in einem horizontalen Behälter 91 schematisch dargestellt. Bei dieser Anordnung handelt es sich um einen horizontal angeordneten Behälter 91, in dessen Innerem sich das Medium befindet, wobei die Darstellung so gewählt ist, daß der Grenzstand etwa der Zeichnungsebene entspricht. Fig. 10 ist im wesentlichen eine Art Draufsicht auf den in Fig. 8 dargestellten Behälter, bei dem, im Gegensatz zur Fig. 10, ein ungestörter Strahlengang veranschaulicht wird.

Das radiometrische Meßsystem nach Fig. 10 umfaßt einen Strablendetektor 94 und eine Strahlenquelle in einem Strahlenschutzbehälter 95, die jeweils seitlich am Behälter 91 angebracht sind. Bei der hier dargestellten besonderen Anwendung handelt es sich um einen Behälter 91, der in seinem Inneren einen hier schematisch gezeigten Behältereinbau 97a aufweist, z.B. einen Rührer, ein Zulaufrohr oder eine Achse eines Rührers). Wichtige Kenngrößen zur Bestimmung einer optimierte Anordnung des Meßsystems nach dem erfindungsgemäßen Verfahren sind daher neben Angaben zum Innendurchmesser 22 und zur Wandstärke 23 des Behälters 21 auch Angaben zum Einbaus 97a, beispielsweise zu einem Durchmesser 97b, wenn es sich wie hier dargestellt um einen Einbau 97a mit kreisförmigem Querschnitt handelt. Für das erfindungsgemäße Verfahren ist es wichtig, daß solche Angaben vorliegen, mit denen jene Position des Strahlenschutzbehälters ermittelt werden kann, bei der einen von Einbauten im Behälter ungestörter und optimierten Strahlengang erfolgt. Die Lage des Strahlenschutzbehälters 95 in Bezug auf den Behälter wird dann durch Angaben zu den Mittenabständen 98a, b beschrieben.

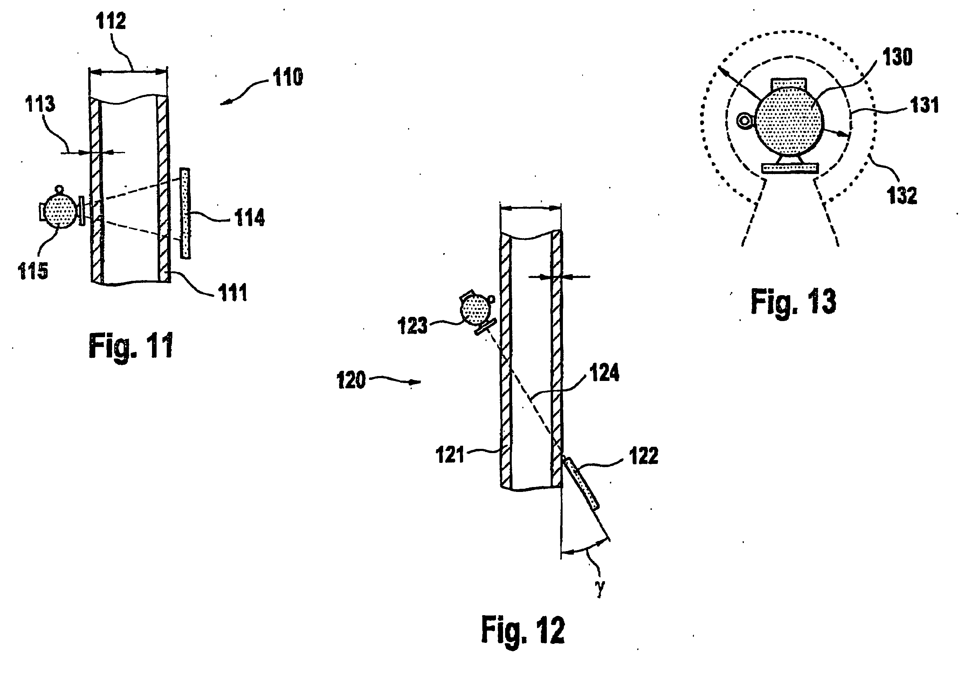

In Fig. 11 ist eine neunte Anordnung 110 einer Meßstelle mit einem radiometrischen Meßsystem zur Bestimmung einer Dichte eines in einem Rohr 111 befindlichen Mediums schematisch dargestellt. Das radiometrische Meßsystem umfaßt einen Strahlendetektor 114 und eine Strahlenquelle in einem Strahlenschutzbehälter 115, die jeweils seitlich am Rohr 111 angebracht sind. Wichtige Kenngrößen zur Bestimmung einer optimierte Anordnung des Meßsystems nach dem erfindungsgemäßen Verfahren sind ein Innendurchmesser 112 und eine Wandstärke 113 des Rohres 111. Der Strahlendetektor 114 wird vorzugsweise parallel zum Rohr 111 angeordnet.

In Fig. 12 ist eine zehnte Anordnung 120 einer Meßstelle mit einem radiometrischen Meßsystem zur Bestimmung einer Dichte eines in einem Rohr 121 befindlichen Mediums schematisch dargestellt. Das radiometrische Meßsystem umfaßt einen Strahlendetektor 124 und eine Strahlenquelle in einem Strahlenschutzbehälter 125, die jeweils seitlich am Rohr 121 angebracht sind. In einigen Fällen ist erforderlich, wie hier dargestellt, den Weg,-den die radioaktive Strahlug im Rohr 121durch das zu messende Medium und/oder im Strahlendetektor nehmen muß, zu vergrößern. Die einfachste Möglichkeit ist es, den Strahlendetektor 124 nicht senkrecht oder parallel zum Rohr 121 anzuordnen sondern unter einem Winkel y, wie in Fig. 12 dargestellt. Damit läßt sich eine bessere Auflösung für Dichteänderungen erreichen. Andere wichtige Kenngrößen zur Bestimmung einer optimierte Anordnung des Meßsystems nach dem erfindungsgemäßen Verfahren sind ein Innendurchmesser 122 und eine Wandstärke 123 des Rohres 121.

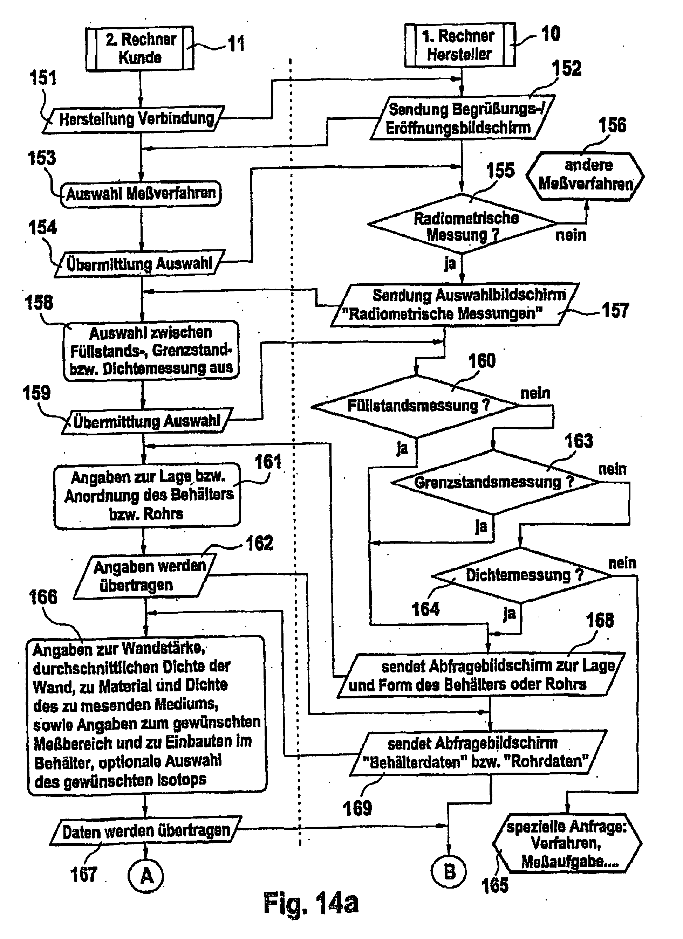

Die schematische Darstellung eines-Strahlenschutzbehälters 130 in Fig. 13 veranschaulicht Strahlenschutz- und Sicherheits-relevante Kenngrößen, die zur Berechnung von Ortsdosisleistungen am und in verschiedenen Entfernungen um den Behälter herum dienen. In einigen Ländern sind entsprechende Vorschriften zu beachten, die solche Berechnungen und Angaben für Zulassungsverfahren des radiometrischen Anlagen erfordern, wobei die zulässigen Höchstwerte in den verschiedenen Zonen um den Strahlenschutzbehälter herum einzuhalten sind. Wichtige Kenngrößen zur Berechnung nach dem erfindungsgemäßen Verfahren sind dazu neben Angaben zur verwendeten Strahlenquelle z.B. ein innerer Durchmesser 131 und ein äußerer Durchmesser 132 des Behälters 130, wie sie in Fig. 13 dargestellt sind. Dort ist der Austritt der Strahlung beim Meßbetrieb mit "133" bezeichnet.

Der Einfachheit halber zeigen die hier dargestellten Ausführungsformen eines radiometrischen Meßsystems gerade bzw. stabförmige Strahlendetektoren. Dem Fachmann ist jedoch klar, daß mit dem Verfahren nach der Erfindung auch andere optimierte Anordnungen radiometrischer Meßsysteme, die z.B. gebogene oder plattenförmige Strahlendetektoren umfassen, bestimmt und dargestellt werden können.

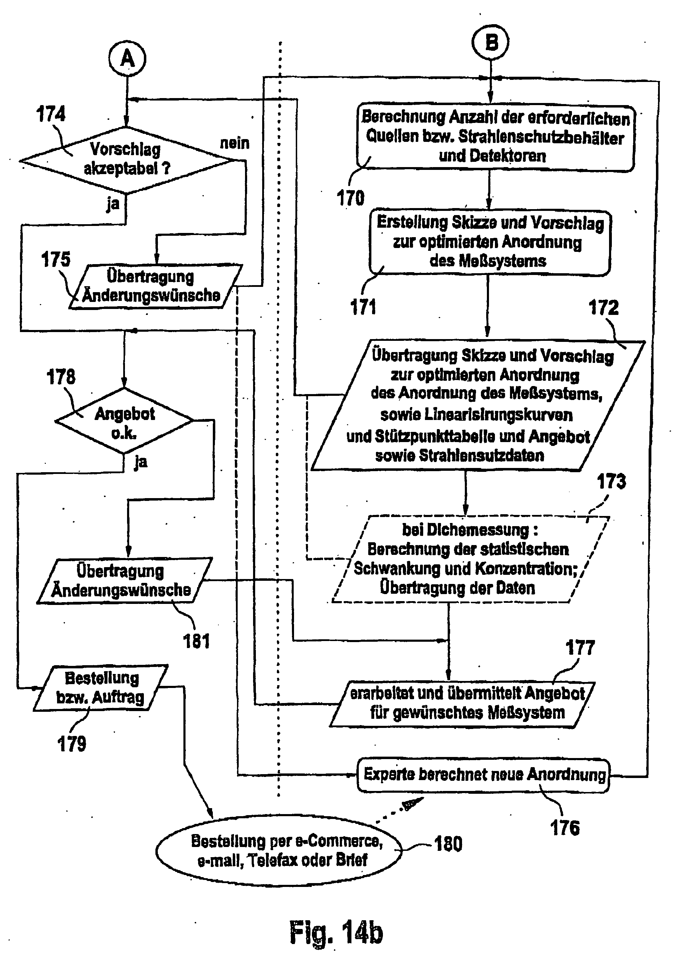

Wie eine solche Bestimmung und Darstellung eines radiometrischen Meßsystems nach der Erfindung abläuft, wird im Folgenden unter Bezugnahme auf die Fig. 14a und 14b erklärt, die ein Beispiel eines vorteilhaften-und-bevorzugten Verfahrens in einem-Ablaufdiagramm illustrierten. Da sich die Darstellung des Ablaufdiagramms aus Gründen der Übersichtlichkeit über zwei Figuren erstreckt, sind Verbindungs-bzw. Anknüpfungspunkte durch Buchstaben A, und B (jeweils in einem Kreis) veranschaulicht.

Das Verfahren zur Bestimmung und Darstellung einer optimierten Anordnung und Montage eines radiometrischen Meßsystems nach der Erfindung läuft beispielsweise unter Zuhilfenahme einer in Fig. 1 dargestellten Anordnung ab, wobei aus Gründen einer vereinfachten Darstellung der erste elektronische Rechner 10 (siehe Fig. 1 und oben im zugehörenden Beschreibungstext) einem Hersteller und/oder Anbieter von solchen radiometrischen Meßsystemen zuzurechnen ist. Der zweite Rechner 11 ist üblicherweise bei einem Kunden zu finden, der sich für ein radiometrisches Meßsystem interessiert oder auch z.B. bei einem Anlagenplaner, einem Ingenieurbüro oder einem anderen Berater, der sich mit der Projektierung und gegebenenfalls der Beschaffung eines solchen radiometrischen Meßsystems beschäftigt. Selbstverständlich ist das in den Fig. 14a und 14b veranschaulichte erfindungsgemäße Verfahren nicht auf die zwei beispielhaften Rechner 10 und 11 beschränkt, sondern es eignet sich auch zur Verwendung mit mehreren oder weiteren mit dem ersten Rechner 10 in Verbindung tretenden Rechnern. Zur Vereinfachung wird die nachfolgende Erläuterung auf die in Fig. 1 dargestellte Konstellation beschränkt; das Verfahren mit weiteren Rechnern läuft in entsprechender Weise ab.

Zunächst stellt ein Kunde, ein Anwender oder eine andere Person, die sich für ein radiometrisches Meßsystem interessiert, von seinem zweiten Rechner 11 eine Verbindung 151 zum ersten Rechner 10 her, der beispielsweise bei einem Hersteller bzw. Anbieter von radiometrischen Meßsystemen steht. Eine solche Verbindung zweier oder mehrerer Rechner miteinander wird üblicherweise über ein Netzwerk zur Datenfernübertragung, beispielsweise ein drahtgebundenes oder drahtloses Telefonnetz hergestellt, wobei es an sich bekannt, den gewünschten Verbindungsrechner direkten über das Telefonnetz anzuwählen oder eine Internet-Verbindung aufzubauen.

Nachdem eine stabile Verbindung zwischen dem ersten und dem zweiten Rechner 10, 11 besteht, übersendet der erste Rechner 10 an den zweiten Rechnerl11 einen Begrüßungs- bzw. Eröffnungsbildschim 152, der auf dem Monitor 12 des zweiten Rechners 11 angezeigt wird. Mit diesem Eröffnungsbildschirm 152, mit dem der Hersteller beispielsweise sein Unternehmen und seine Produkte bzw. die von ihm angebotenen Leistungen vorstellt, wird der Kunde aufgefordert, ein von ihm gewünschtes Meßverfahren, sei es z.B. ein Druck-, ein Durchfluß-, ein Füllstands- und/oder ein anderes Verfahren der Prozeßmeßtechnik auszuwählen und mit der Eingabevorrichtung 13 (siehe dazu Fig. 1) zu markieren. Nachdem der Kunde seine Auswahl 153 getroffen hat, wird er diese an den ersten Rechner 10 schicken (s. "154"), wo gemäß dem Verfahren nach der Erfindung eine Prüfung 155 erfolgt, ob der Kunde ein radiometrisches Verfahren gewählt hat.

Der Fall, daß der Kunde ein anderes als ein radiometrisches Verfahren ausgewählt hat, wird ein für dieses andere Meßverfahren 156 geeigneter Verfahrensschritt ablaufen. Da dieser aber nicht Gegenstand der Erfindung ist, wird hier nicht näher darauf eingegangen.

In dem Falle, wo der Kunde sich für radiometrische Verfahren entschieden hat, übermittelt der erste Rechner 10 dem zweiten Rechner 11 einen Auswahlbildschirm 157, der die verschiedenen angebotenen radiometrischen Meßverfahren, z.B. Füllstands-, Grenzstands- oder Dichtemeßverfahren auflistet und gegebenenfalls erklärt. Außerdem wird der Kunde aufgefordert, aus den auf dem Monitor angezeigten radiometrischen Meßverfahren eines auszuwählen und die Auswahl 158 dem ersten Rechner 10 zu schicken (siehe "159"). Hier erfolgt gemäß dem Verfahren nach der Erfindung eine Prüfung 160, 163, 164, welches der radiometrischen Verfahren vom Kunden gewählt wurde.

Hat der Kunde ein radiometrisches Verfahren zur Füllstandsmessung ausgewählt, so sendet der erste Rechner 10 an den zweiten Rechner 11 einen Abfragebildschirm 168, in dem der Kunde um eine Angabe zur Position und Lage des Behälters gebeten wird. Insbesondere wird gefragt, ob es sich um einen horizontal oder vertikal angeordneten zylindrischen Behälter (siehe dazu die ähnlichen Anordnungen der Fig. 2, 4 und 5) handelt und ob er im interessierenden Meßbereich eine konische Form (siehe dazu die ähnliche Anordnung der Fig. 3) aufweist. Ist das letztere der Fall, sendet der erste Rechner 10 vorzugsweise eine Skizze 169 einer Anordnung eines Meßsystems, wie es in Fig. 3 beispielhaft dargestellt ist und mittels dessen dem Kunden die einzelnen Kenngrößen des Meßsystems veranschaulicht werden. Dies sind im Falle des konischen Behälters 31 nach Fig. 3 insbesondere der Innendurchmesser 32, die Wandstärke 33 des Behälters 31 sowie ein Winkel α, mit dem die Konizität des Behälters berücksichtigt werden kann, und der Meßbereich 36, in dem der Füllstand des Mediums im Behälter 31 gemessen werden soll.

Hat der Kunde ein Verfahren zur Füllstandsmessung in einem horizontal angeordneten zylindrischen Behälter ausgewählt, so sendet der erste Rechner 10 an den zweiten Rechner 11 den Abfragebildschirm 168 mit einer skizzierten Anordnung ähnlich der in Fig. 2, in dem der Kunde um eine Angabe zu den einzelnen Kenngrößen des Meßsystems veranschaulicht werden. Dies sind im Falle des horizontal angeordneten Behälters 31 nach Fig. 2 insbesondere ein Innendurchmesser 22 und eine Wandstärke 23 des Behälters 21 sowie der Meßbereich 26.

Hat der Kunde ein Verfahren zur Füllstandsmessung in einem vertikal angeordneten zylindrischen Behälter ausgewählt, so sendet der erste Rechner 10 an den zweiten Rechner 11 den Abfragebildschirm 168 mit einer skizzierten Anordnung ähnlich der in Fig. 4, in dem der Kunde um eine Angabe zu den einzelnen Kenngrößen des Meßsystems veranschaulicht werden. Dies sind im Falle des vertikal angeordneten Behälters 41 nach Fig. 4 insbesondere ein Innendurchmesser 42 und eine Wandstärke 43 des Behälters 41 sowie der Meßbereich 46.

Falls der Kunde ein radiometrisches Verfahren zur Grenzstandmessung ausgewählt hat, so sendet der erste Rechner 10 an den zweiten Rechner 11 den Abfragebildschirm 168, in dem der Kunde um eine Angabe zur Position und Lage des Behälters gebeten wird. Insbesondere wird in diesem Falle gefragt, ob es sich um einen zylindrischen Behälter 71, 91 (siehe dazu die ähnlichen Anordnungen der Fig. 8, 10) handelt und ob der Behälter 81 eine konische Form (siehe dazu die ähnliche Anordnung der Fig. 9) aufweist. Der erste Rechner 10 sendet zu diesem Zweck vorzugsweise eine Skizze 168 einer Anordnung eines Meßsystems, wie es in Fig. 7, 8 bzw. 9 beispielhaft dargestellt ist und mittels dessen dem Kunden die einzelnen Kenngrößen des Meßsystems veranschaulicht werden. Insbesondere sind dies (siehe dazu Fig. 9) der Innendurchmesser 82 und die Wandstärke 83 des Behälters 81 sowie ein Winkel α, mit dem die Konizität des Behälters 81 berücksichtigt werden kann. Der zu erfassende Grenzstand 86 des Mediums im Behälter 81 ist durch eine gepunktete Linie symbolisiert. Im Falle von Schüttgut als Medium im Behälter 81 muß für die Bestimmung des Grenzstands noch die vertikale zugelassene Erstreckung eines Schüttkegels über den Grenzstand hinaus berücksichtigt werden.

Falls der Kunde eine Dichtemessung ausgewählt hat, die häufig bei strömenden bzw. fließenden Medien in Rohren durchgeführt wird, sendet der erste Rechner 10 an den zweiten Rechner 11 den Abfragebildschirm 168, in dem der Kunde um eine Angabe zur Position und Lage des Rohres 111 (siehe Fig. 11) gebeten wird. Der erste Rechner 10 sendet zu diesem Zweck vorzugsweise eine Skizze 168 einer Anordnung eines Meßsystems, wie es in Fig. 11 beispielhaft dargestellt ist und mittels dessen dem Kunden die einzelnen Kenngrößen des Meßsystems, wie z.B. ein Innendurchmesser 112 und eine Wandstärke 113 des Rohres 111, veranschaulicht werden.

Bei all den geschilderten Abfragebildschirmen 168 wird dem Kunden bereits ein für die gewählte Anordnung übliches radioaktives Präparat, z.B. mit einem Isotop Cäsium 137, vorgeschlagen. Der Kunde hat jedoch die Möglichkeit seinerseits ein anderes Isotop, z.B. Kobalt 60, aus einer Vorschlagsliste zu wählen.

Sollte der Kunde keines der erwähnten radiometrischen Verfahren zur Füllstands-, Grenzstands- oder Dichte-Messung ausgewählt haben, so handelt es sich vermutlich um eine spezielle, anders gelagerte Anfrage 165, die hier nicht weiter diskutiert wird, weil nicht Gegenstand der vorliegenden Erfindung ist.

Hat der Kunde die gewünschten Angaben zu den jeweiligen Behältern, zum Rohr und gegebenenfalls zum Medium und Isotop bzw. Präparat auf dem Abfragebildschirm 166 eingetragen, werden diese Angaben 167 an den ersten Rechner 10 übertragen.

Auf dem ersten Rechner 10 wird nun unter Zugrundelegung der vom zweiten Rechner erhaltenen Behälter- bzw. Rohr-spezifischen Daten für das gewählte Meßverfahren eine optimierte Anordnung des radiometrischen Meßsystems am bzw. auf dem Behälter oder Rohr berechnet.

Aus den verschiedenen Daten und/oder Musteranordnungen von unterschiedlichen radioaktiven Präparaten, Strahlenschutzbehälter und Detektoren unterschiedlichster Art, Länge und Form, werden die für die vom Kunden übermittelten Kenngrößen am geeignetsten Kombinationen herausgesucht, wobei gegebenenfalls bereits vorher entwickelte und /oder in der Praxis erprobte Anordnungen berücksichtigt werden können. Ein besonders wichtiger Aspekt bei der Bestimmung und Auslegung des kundenspezifischen radiometrischen Meßsystems kommt der Bestimmung der für die Messung bzw. Messungen am besten geeigneten Aktivität der Strahlenquelle bzw. der Strahlenquellen zu.

Unter anderem wird im einzelnen und unter Beachtung der bei einem Hersteller oder am Markt von verschiedenen Herstellern erhältliche Strahlenquellen und - Behälter und Detektoren z.B. bestimmt (siehe "170" in Fig.14b), ob für das kundenspezifische radiometrische Meßsystem und den angegebenen Meßbereich 26, 36, 46 (siehe Fig. 2, 3, 4) eine einzelne Strahlenquelle 25, 35, 45 und ein einzelner Detektor 24, 34, 44 ausreicht oder ob mehrere Detektoren 54a-c bzw. 64a, b (siehe dazu Fig. 5 und 6) und mehrere Strahlenquellen 55a-c (siehe dazu Fig. 5) für die gewünschte Messung notwendig sind.

Nachdem die hinreichende (und erforderliche) Zahl von Strahlenquellen und Detektoren bestimmt wurde, werden die aus technischer und sicherheitlicher Sicht notwendigen und eventuell den Kundenwünschen angepaßten Abstände der Strahlenquellen und Detektoren bestimmt und die geometrische Anordnung am jeweiligen Behälter oder Rohr festgelegt. Mit all diesen Daten wird anschließen eine Skizze 171 erstellt, die z.B. wie eine der Darstellungen der Fig. 2 bis 5 bzw. 8 bis 12 aussieht, die aber nunmehr alle bestimmten Kenndaten zur jeweiligen Anordnung enthält. Die vollständig gemäß nach der Erfindung auf dem ersten Rechner 10 erstellte Skizze 171 wird, wie durch "172" veranschaulicht, zum zweiten Rechner 11, also beispielsweise zum Kunden übertragen, wo sie auf dem dortigen Monitor 12.(siehe Fig. 1) angezeigt wird.

Für den Fall, daß es sich um eine Auslegung eines radiometrischen Meßsystems für Füllstandsmessungen (siehe Fig. 2 bis 5) handelt, wird vorteilhafterweise auf dem ersten Rechner 10 aus den vorliegenden Daten eine der gewünschten Anordnung entsprechende Linearisierungskurve ähnlich den in den Fig. 7a bzw. 7b dargestellten, bestimmt und ebenfalls zum zweiten Rechner übertragen und dort dargestellt.

Im Falle einer Auslegung eines radiometrischen Meßsystems für eine Dichtemessung (siehe Fig. 11, 12) werden vorzugsweise auf dem ersten Rechner 10 aus den vorliegenden Informationen Werte bestimmt, die dem Nutzer helfen, die bei der Dichte-Messung infolge von Konzentrationsänderungen im Medium auftretenden möglichen Schwankungen der Meßwerte zu berechnen. Diese Werte 173 werden z.B. in Form von Kurven oder Tabellen zum zweiten Rechner 11 übertragen.

In wieder anderen Fällen ist es für den Kunden hilfreich, Informationen zu haben über die Verteilung der Ortsdosisleistungen um den oder die Strahlenschutzbehälter des oben erwähnten radiometrischen Meßsystems herum. Auch eine solche Berechnung wird gegebenenfalls auf dem ersten Rechner 10 im Rahmen des Verfahrens nach der Erfindung durchgeführt und in Form einer Skizze ähnlich der Darstellung der Fig. 13 zum zweiten Rechner 11 übertragen und dort angezeigt. Dabei werden z.B. für eine im wesentlichen kugelförmige Oberfläche mit dem inneren Durchmesser 131 und für eine entsprechende im wesentlichen kugelförmige Oberfläche mit dem äußeren Durchmesser 132 um den Strahlenschutzbehälter 130 herum die jeweilig dort herrschenden Ortsdosisleistung z.B. in µSv/h angegeben.

Der Kunde wird die vom ersten Rechner 10 übertragenen Daten und Darstellungen 172, 173 zu dem nach der Erfindung bestimmten Auslegung und Anordnung des gewünschten radiometrischen Systems prüfen (siehe dazu "174" in Fig. 14b). Er wird im Falle seines Einverständnisses dies dem ersten Rechner 10 mitteilen.
Falls der vom ersten Rechner 10 übertragene Vorschlag mit den Daten und Darstellungen 172, 173 nicht die Zustimmung des Kunden findet, wird der letztere seine Änderungswünsche 175 mitteilen. Auf dem ersten Rechner 10 wird dann eine neue Berechnung zur Bestimmung und Auslegung des kundenspezifischen radiometrischen Meßsystems-stattfinden, die im wesentlichen wie oben abläuft, jedoch auf den geänderten Kenngrößen beruht. Diese Möglichkeiten zur Änderung der Anordnung können solange vorgenommen werden, bis der Kunde sein Einverständnis mit einer Anordnung vom ersten Rechner 10 berechneten und bestimmten Meßystem erklärt hat. Sollte es jedoch darüber hinaus Bedarf für eine Berechnung und Auslegung eines sehr spezifischen und außergewöhnlichen radiometrischen Meßsystems geben, bietet das erfindungsgemäße Verfahren auch die Möglichkeit eine spezielle Berechnung und Auslegung von einem besonderen Experten ausführen zulassen (siehe "176" in Fig. 14b). Das von diesem Experten bestimmte Meßsystem wird entsprechend dem oben geschilderten Ablauf entwickelt und dem Kunden auf den zweiten Rechner 11 übertragen.

Hat der erste Rechner 10 das Einverständnis des Kunden mit dem bestimmten radiometrischen Meßsystem erhalten, so wird aus den zur Verfügung stehenden, für einen Einkauf relevanten Daten zu einzelnen Komponenten des Meßsystems, wie z.B. Bestell-Nr. und Preis für den zu installierenden Detektor, Strahlenschutzbehälter etc., ein vollständiges Angebot 178 für ein komplettes Meßsystem erstellt und zusammen mit kaufmännisch und rechtlich relevanten Lieferbedingungen auf den zweiten Rechner 11 übertragen und dort angezeigt.

Nimmt der Kunde nach Prüfung 178 dieses Angebot an, so löst er gegebenenfalls die Bestellung 179 aus, die dann in beliebiger Form 180, beispielsweise per Telefax, Brief oder auch im Rahmen eines sogenannten E-Commerce-Aktion, bearbeitet und abgewickelt werden kann.

Sollte der Kunde mit dem auf den zweiten Rechner übertragenen und erfindungsgemäß erstellten Angebot für das gewünschte Meßsystem nicht einverstanden sein, wird er seine Änderungswünsche 181 dem ersten Rechner 10 mitteilen, so daß dann dort entsprechend dem oben erwähnten Ablauf ein neues Angebot 177 erstellt werden kann, und zwar so oft bis der Kunde seine Annahme erklärt und die Bestellung 179, 180 auslöst.

Die oben erwähnten Ausführungsformen des Verfahrens nach der Erfindung betreffen solche Verfahren, bei den Behälter-, Rohr- und Medien-spezifische Daten bzw. Kenndaten durch einen Nutzer bzw.Kunden eingegeben und zum ersten Rechner 10 übertragen werden. Es ist aber im Rahmen der Erfindung möglich, daß der Nutzer bzw. Kunde Behälter-, Rohr- und Medien-spezifische Daten bzw. Kenndaten aus einer oder mehreren auf dem ersten Rechner vorhandenen Datenbanken auswählen kann und daß diese Daten bei der erfindungsgemäßen Bestimmung und Darstellung einer optimierten Auslegung und Anordnung des radiometrischen Meßsystems verwendet werden. Um eine solche Datenbank oder Datenbanken auf einem aktuellen Stand zu halten, ist es sinnvoll, in den Fällen, wo der Nutzer bzw. Kunde keine Daten aus bereits vorhandenen Datenbanken verwenden kann sondern selbst, noch nicht vorhandene Behälter-, Rohr- und Medien-spezifische Daten bzw. Kenndaten eingibt, die Datenbanken mit diesen neuen Daten zu aktualisieren.

Weiterhin ist es denkbar, daß das Verfahren zur Bestimmung und Darstellung der optimierten Auslegung und Anordnung des radiometrischen Meßsystems Teil eines umfassenderen Verfahrens zur Bestimmung und Darstellung von optimierten Anordnungen von verschiedenartigsten Meßsystemen einer industriellen Fertigungsanlage im Rahmen eines Projektmanagements ist, das im Prinzip in ähnlicher Weise wie das erstere ablaufen kann.

## Patentansprüche

1. Verfahren zur Bestimmung und Darstellung einer optimierten Anordnung und Montage eines radiometrischen Meßsystems bzw. einer radiometrischen Meßstelle einer industriellen Prozeßmeß- und/oder Prozeßsteueranlage, welches radiometrische Meßsystem zur Messung von mindestens einer Prozeßvariablen oder Prozeßgröße, insbesondere zur Messung von mindestens einer Kenngröße eines im Behälter oder Rohres enthaltenen Mediums, dient und welches Verfahren unter Zuhilfenahme wenigstens eines ersten elektronischen Rechners und eines damit verbundenen zweiten elektronischen, eine Anzeige-, eine Prozessor-gesteuerte Datenverarbeitungs- und eine Eingabevorrichtung umfassenden Rechners abläuft und folgende Schritte umfaßt:
a) unter Zugrundelegung von Behälter- bzw. Rohr-spezifischen Daten, insbesondere Angaben zur grundsätzlichen Form und zur Lage, zum Durchmesser, zu Wandstärken und/oder Materialien und zu einem zu erwartenden Meßbereich, die vom zweiten Rechner an und auf den ersten Rechner übertragen werden, wird eine optimierte Anordnung von wenigstens einer Strahlenquelle mit einer für die besondere Anwendung am besten geeigneten Aktivität der Strahlenquelle bzw. der Strahlenquellen und wenigstens einem Strahlendetektor des radiometrischen Meßsystems am bzw. auf dem Behälter oder Rohr berechnet;
b) auf dem ersten Rechner wird unter Zuhilfenahme von dort in einer Datenbank verwalteten gerätespezifischen Daten eine Auswahl von geeigneten Geräten bzw. Komponenten für ein der optimierten Anordnung entsprechendes radiometrischen Meßsystems ermittelt und zusammengestellt und anschließend zum zweiten Rechner übertragen und auf dessen Anzeigevorrichtung dargestellt;
c) dann wird eine den Behälter bzw. das Rohr und die dafür optimierte Anordnung des radiometrischen Meßsystems darstellende schematische Zeichnung erstellt und auf der Anzeigevorrichtung des zweiten Rechners dargestellt.

2. Verfahren nach Anspruch 1, bei dem zusätzlich eine für die spezielle optimierte Anordnung des radiometrischen Meßsystems am Behälter oder Rohr geltende Linearisierungskurve und/oder Linearisierungstabelle erstellt wird, die zur Auswertung der mit dem bzw. mit den Detektoren gemessenen Meßgrößen dient.

3. Verfahren nach Anspruch 2, bei dem eine optimierte Anordnung eines radiometrischen Meßsystems zur Messung eines Füllstands des im Behälter enthaltenen Mediums bestimmt und dargestellt wird.

4. Verfahren nach einem der Ansprüche 2 oder 3, bei dem eine optimierte Anordnung eines radiometrischen Meßsystems zur Messung einer Dichte des im Rohr enthaltenen Mediums bestimmt und dargestellt wird.

5. Verfahren nach einem der Ansprüche 2 oder 3, bei dem eine optimierte Anordnung eines radiometrischen Meßsystems zur Messung eines Grenzstandes des im Behälter enthaltenen Mediums bestimmt und dargestellt wird.

6. Verfahren nach den Ansprüchen 3 bis 5, bei dem eine optimierte Anordnung eines radiometrischen Meßsystems für eine beliebige Kombination von Messungen des Grenzstands, der Dichte und/oder des Füllstand des Mediums bestimmt und dargestellt wird.

7. Verfahren nach einem der Ansprüche 1 bis 6, bei dem zusätzlich Zubehör zum radiometrischen Meßsystem bestimmt und dargestellt wird.

8. Verfahren nach einem der Ansprüche 1 bis 7, bei dem Strahlenschutzrelevante Berechnungen für wenigstens einen Strahlenschutzbehälter für die Strahlenquelle bzw. Strahlenquellen ausgeführt und dargestellt werden.

9. Verfahren nach einem der Ansprüche 1 bis 8, bei dem Strahlenschutzrelevante Berechnungen für wenigstens einen Strahlendetektor ausgeführt und dargestellt werden.

10. Verfahren nach einem der Ansprüche 1 bis 9, bei dem Strahlenschutzrelevante Berechnungen für einen leeren Behälter bzw. ein leeres Rohr ausgeführt und dargestellt werden.

11. Verfahren nach einem der Ansprüche 1 bis 10, bei dem der erste und der zweite Rechner mittels wenigstens einer Datentaustauschvorrichtung und/oder über eine Kabelverbindung miteinander verbunden sind.

12. Verfahren nach einem der Ansprüche 1 bis 11, bei dem der erste und der zweite Rechner mittels kabellos über wenigstens eine Datentaustauschvorrichtung miteinander verbunden sind.

13. Verfahren nach einem der Ansprüche 1 bis 12, bei wenigstens einer der beiden Rechner ein Stand-alone-Rechner oder eine Arbeitsstation eines weitere Rechner umfassenden Netzwerkes ist.

14. Verfahren nach einem der Ansprüche 11 bis 13, bei dem die Datentaustauschvorrichtung ein Modem und/oder ein sonstiger Adapter zur drahtlosen Verbindung mit dem Telefonnetz ist.

15. Verfahren nach einem der Ansprüche 9 bis 14, bei dem eine weitere Bestimmung und Darstellung einer optimierten Anordnung und Montage eines radiometrischen Meßsystems an einem Behälter oder Rohr auf der Grundlage einer anderer Strahlenquelle bzw. anderer Strahlenquellen und/oder anderer Detektoren durchgeführt wird und die Ergebnisse auf dem zweiten Rechner dargestellt werden.

16. Verfahren nach einem der vorgehenden Ansprüche 1 bis 15, wobei auf dem ersten Rechner in Form einer Datenbank vorhandene spezifische Daten zu Medien verwendet werden.

17. Verfahren nach einem der vorgehenden Ansprüche 1 bis 16, wobei auf dem ersten Rechner in Form einer Datenbank vorhandene spezifische Daten zu Materialien für Behälter- bzw. Rohr-Wandungen verwendet werden.

18. Verfahren nach den Ansprüchen 16 und 17, wobei die Datenbanken nach jeder Bestimmung und Darstellung einer optimierten Anordnungen eines radiometrischen Meßsystems durch neu eingegebene Daten zu Behälter, Rohr und/oder Medium aktualisiert werden.

19. Verfahren nach einem der vorgehenden Ansprüche 1 bis 18, **dadurch gekennzeichnet, daß** es Teil eines umfassenderen Verfahrens zur Bestimmung und Darstellung von optimierten Anordnungen von Meßsystemen einer industriellen Fertigungsanlage im Rahmen eines Projektmanagements ist.

## Revendications

1. Procédé pour la détermination et la représentation d'un dispositif optimisé et le montage d'un système de mesure radiométrique, respectivement d'un endroit de mesure radiométrique d'une installation de mesure de procédé et/ou d'une installation de commande de procédé , lequel système de mesure radiométrique sert à mesurer au moins une variable de procédé ou une grandeur de procédé, notamment pour mesurer au moins une grandeur caractéristique d'un médium contenu dans un récipient ou un tube, et lequel procédé se déroule au moyen d'au moins un premier calculateur électronique et au moyen d'un deuxième calculateur lié au premier calculateur, électronique comportant un dispositif d'affichage, un dispositif de traitement de données commandées par un processeur et un dispositif d'entrée, et lequel procédé comporte les étapes suivantes :
a) en se basant sur des données spécifiques au récipient et au tube, notamment sur des indications concernant la forme de base et sur la position, le diamètre, l'épaisseur de paroi et/ou d'autres matériels et concernant une zone de mesure à attendre, lesquelles données sont transmises du deuxième calculateur vers le premier calculateur, on calcule une installation optimisée d'au moins une source de rayonnement avec une activité de la source de rayonnement, notamment des sources de rayonnement les mieux appropriées pour l'application spécifique et on calcule au moins un détecteur de rayonnement du système de mesure radiométrique sur le récipient ou le tube.
b) sur le premier calculateur, on détermine et on compose au moyen de données spécifiques à l'appareil gérées à partir de ce calculateur dans une banque de données, une sélection d'appareils appropriés, notamment des composants pour un système de mesure radiométrique correspondant au dispositif optimisé, puis ladite sélection d'appareils est transmise au deuxième calculateur et représentée sur le dispositif d'affichage dudit calculateur ;
c) puis on réalise un dessin schématique représentant le récipient et le dispositif optimisé pour le récipient et le tube du système de mesure radiométrique et ledit dessin est représenté sur le dispositif d'affichage du deuxième calculateur.

2. Procédé selon la revendication 1, dans lequel on réalise en plus, sur le récipient ou le tube, une courbe de linéarisation et/ou un tableau de linéarisation valable pour le dispositif optimisé spécifique du système de mesure radiométrique, laquelle courbe de linéarisation sert à évaluer les grandeurs de mesure mesurées avec le, respectivement, les détecteurs.

3. Procédé selon la revendication 2, dans lequel on détermine et on représente un dispositif optimisé d'un système de mesure radiométrique pour mesurer un niveau de remplissage du médium contenu dans le récipient.

4. Procédé selon une des revendications 2 ou 3, dans lequel on détermine et on représente un dispositif optimisé d'un système de mesure radiométrique pour mesurer une densité du médium contenu dans le tube.

5. Procédé selon une des revendications 2 ou 3, dans lequel on détermine et on représente un dispositif optimisé d'un système de mesure radiométrique pour mesurer la limitation du médium contenu dans le récipient.

6. Procédé selon les revendications 3 à 5, dans lequel on détermine et on représente un dispositif optimisé d'un système de mesure radiométrique pour une combinaison quelconque de mesures de limitation, de la densité et/ou du niveau de remplissage du médium.

7. Procédé selon une des revendications 1 à 6, dans lequel on détermine et on représente en plus, un accessoire pour le système de mesure radiométrique.

8. Procédé selon une des revendications 1 à 7, dans lequel on réalise et on représente des calculs concernant une protection contre la radiation pour au moins un récipient protégé contre les rayonnements pour la source de rayonnement, respectivement les sources de rayonnement.

9. Procédé selon une des revendications 1 à 8, dans lequel on réalise et on représente des calculs concernant une protection contre la radiation pour au moins un détecteur de rayonnements.

10. Procédé selon une des revendications 1 à 9, dans lequel on réalise et on représente des calculs concernant la protection contre la radiation pour un récipient vide, respectivement un tube vide.

11. Procédé selon une des revendications 1 à 10, dans lequel le premier et le deuxième calculateur sont reliés entre eux au moyen d'au moins un dispositif d'échange de données et/ou par une liaison par câble.

12. Procédé selon une des revendications 1 à 11, dans lequel le premier et le deuxième calculateur sont reliés ensemble sans câble par au moins un dispositif d'échange de données.

13. Procédé selon une des revendications 1 à 12, dans lequel au moins un des deux calculateurs est un calculateur stand-alone ou une station de travail d'un réseau comportant un autre calculateur.

14. Procédé selon une des revendications 11 à 13, dans lequel le dispositif d'échange de données est un modem et/ou un adaptateur quelconque pour effectuer la liaison sans fil avec le réseau téléphonique.

15. Procédé selon une des revendications 9 à 14, dans lequel on réalise une autre détermination et représentation d'un dispositif optimisé et le montage d'un système de mesure radiométrique sur le récipient ou le tube sur la base d'une autre source de rayonnement, respectivement d'autres sources de rayonnement et/ou d'autres détecteurs et les résultats sont représentés sur le deuxième calculateur.

16. Procédé selon une des revendications 1 à 15, où sur le premier calculateur sous la forme d'une banque de données, on utilise des données spécifiques présentes pour des média .

17. Procédé selon une des revendications précédentes 1 à 16, où sur le premier calculateur sous la forme d'une banque de données, on utilise des données spécifiques présentes pour des matériaux pour des parois du récipient, respectivement du tub.

18. Procédé selon les revendications 16 et 17, où les banques de données sont actualisées après chaque détermination et représentation d'un dispositif optimisé d'un système de mesure radiométrique par des données nouvellement entrées pour le récipient, le tube et/ou le médium.

19. Procédé selon une des revendications 1 à 18, **caractérisé en ce qu'**il est une partie d'un procédé plus complet pour la détermination et la représentation de dispositifs optimisés de systèmes de mesure d'une installation de production industrielle dans le cadre d'une gestion de projet.

## Claims

1. Method for determining and presenting an optimised arrangement and assembly of a radiometric measurement system or radiometric measurement site of an industrial process measurement installation and/or process control installation, which radiometric measurement system serves for measuring at least one process variable or process parameter, in particular for measuring at least one characteristic parameter of a medium contained in the container or pipe, and which method proceeds with the aid of at least one first electronic computer and a second electronic computer connected thereto, which second computer comprises a display device, a processor-controlled data processing device, and an input device, and comprises the following steps:
a) on the basis of container- or pipe-specific data, especially data on the basic form and on the position, diameter, wall thickness and/or materials and on a measurement range to be expected, which are transmitted from the second computer to the first computer, an optimised arrangement of a least one radiation source with an activity of the radiation source or radiation sources best suited for the particular application and at least one radiation detector of the radiometric measurement system at or on the container or pipe is calculated;
b) a selection of suited devices or components for a radiometric measurement system corresponding to the optimised arrangement is established and compiled on the first computer with the aid of device-specific data administered from there in a database, and the selection is subsequently transmitted to the second computer and presented on its display device;
c) then a schematic drawing representing the container or the pipe and the arrangement of the radiometric measurement system optimised therefor is produced and presented on the display device of the second computer.

2. Method according to Claim 1, in which additionally a linearising curve and/or a linearising table serving for evaluating the measurement parameters measured with the detector or detectors is produced for the special, optimised arrangement of the radiometric measurement system at the container or pipe.

3. Method according to Claim 2, in which an optimised arrangement of a radiometric measurement system for measuring a fill level of the medium contained in the container is determined and presented.

4. Method according to one of Claims 2 and 3, in which an optimised arrangement of a radiometric measurement system for measuring a density of the medium contained in the pipe is determined and presented.

5. Method according to one of Claims 2 and 3, in which an optimised arrangement of a radiometric measurement system for measuring a limit level of the medium contained in the container is determined and presented.

6. Method according to Claims 3 to 5, in which an optimised arrangement of a radiometric measurement system for any combination of measurements of the limit level, density and/or fill level of the medium is determined and presented.

7. Method according to one of Claims 1 to 6, in which additionally accessories for the radiometric measurement system are determined and presented.

8. Method according to one of Claims 1 to 7, in which radiation protection-relevant calculations for at least one radiation protection container for the radiation source or sources are performed and presented.

9. Method according to one of Claims 1 to 8, in which radiation protection-relevant calculations for at least one radiation detector are performed and presented.

10. Method according to one of Claims 1 to 9, in which radiation protection-relevant calculations for an empty container or an empty pipe are performed and presented.

11. Method according to one of Claims 1 to 10, in which the first and the second computers are connected to one another by means of at least one data exchange device and/or via a cable connection.

12. Method according to one of Claims 1 to 11, in which the first and the second computers are connected to one another cablelessly via at least one data exchange device.

13. Method according to one of Claims 1 to 12, in which at least one of the two computers is a stand-alone computer or a work station of a network comprising other computers.

14. Method according to one of Claims 11 to 13, in which the data exchange device is a modem and/or another adapter for wireless connection to the telephone network.

15. Method according to one of Claims 9 to 14, in which a further determination and presentation of an optimised arrangement and assembly of a radiometric measurement system at a container or pipe is performed on the basis of another radiation source or other radiation sources and/or other detectors and the results are presented on the second computer.

16. Method according to one of the preceding Claims 1 to 15, wherein specific data on media, present on the first computer in the form of a database, are used.

17. Method according to one of the preceding Claims 1 to 16, wherein specific data on materials for container walls or pipe walls, present on the first computer in the form of a database, are used.

18. Method according to Claims 16 and 17, wherein the databases are updated after each determination and presentation of an optimised arrangement of a radiometric measurement system by newly entered data on container, pipe and/or medium.

19. Method according to one of the preceding Claims 1 to 18, **characterised in that** it is part of a more comprehensive method for determining and presenting optimised arrangements of measurement systems of an industrial production plant within the framework of a project management.
